# EUROPEAN PATENT SPECIFICATION

(11) **EP 2 747 418 B1**
(45) Date of publication and mention of the grant of the patent: **23.03.2016**
(21) Application number: 13198869.3
(22) Date of filing: 20.12.2013
(51) Int. Cl.: H04N 5/232, H04N 5/225, H04N 5/247, F41G 3/22

(54) **Image processor for processing images received from a plurality of image sensors**
Bildprozessor zur Verarbeitung von Bildern mehrerer Bildsensoren
Processeur d'image pour traiter des images reçues à partir d'une pluralité de capteurs d'image

(30) Priority: 20.12.2012 GB 201223051
(43) Date of publication of application: 25.06.2014
(73) Proprietor: Thales Holdings UK Plc, Addlestone, Weybridge, Surrey KT15 2NX (GB)
(72) Inventor: Millward, Robert, Nr Weybridge, Surrey KT152NX (GB); Frosztega, Ed, Nr Weybridge, Surrey KT152NX (GB); Walker, John, Nr Weybridge, Surrey KT152NX (GB)
(74) Representative: Round, Edward Mark

(56) References cited:
- DE-A1- 4 420 422
- US-A- 5 317 394
- US-A- 5 448 290
- US-A1- 2007 188 653
- US-A1- 2012 306 999

## Description

### Field of the invention

The present invention relates to an image processor for processing images received from a plurality of image sensors.

### Background

When piloting or operating a vehicle, it is desirable to maintain as extensive a view of the vehicle's external environment as possible. This is particularly true in military scenarios when performing surveillance, for example, or during combat situations where the operator or crew need to be alert to threats emanating from all directions. The same is also true for aircraft and sea-going vessels.

In order to maximise the visual data available, image sensors may be attached at various parts of the platform. The images received from each sensor can be combined into a single image of the surrounding environment. As the number of image sensors increases, it becomes possible to build up a panoramic view of the platform surroundings.

In order to avoid introducing artefacts into the combined image, it is important to ensure the images received from each sensor are properly aligned with one another. It follows that there is a need to ensure that the images received from each sensor remain correctly aligned over extended periods of time.

US 2007/0188653 proposes an image capturing system comprising a plurality of cameras secured to a camera mount. Images are captured substantially simultaneously with the plurality of cameras and the captured images are stitched together to form a collective image.

US2012/0306999 proposes a method for stitching or aligning multiple images to generate a panoramic image. The images may be aligned using motion data captured at substantially the same time as the image data.

### Summary of invention

According to a first aspect of the present invention, there is provided an image processor as set out in claim 1.

The term "platform" as used in the present application can be understood to refer to any one of a vehicle, aircraft (fixed or rotary wing) or vessel (e.g. a ship). The term "platform" may also refer to a static structure, such as a structure protecting a military base.

For each image sensor, the expected position may be the position of the respective image sensor in the local coordinate frame of the platform at the point at which the previous set of position data was calculated for that sensor.

According to a second aspect of the present invention, there is provided a system as set out in claim 9.

In some embodiments, each motion sensor may comprise one or more accelerometers and / or gyroscopes. For example, each motion sensor may comprise a three-axis accelerometer.

In some embodiments, the image sensors may be synchronised to begin image capture at the same time as one another. The image sensors may be synchronised to output each captured image at the same time as one another. The image sensors may each have the same exposure or camera integration time. The image sensors may be triggered by a common trigger. The common trigger may be provided by the image processor.

In some embodiments, the image processor includes a data analyser that is configured to identify the image sensor from which each one of the received images originates. The data analyser may be configured to identify which one of the image sensors a particular batch of motion data is associated with. The data analyser may pair the image data received from a respective image sensor with the motion data associated with that image sensor, to ensure that the image adjustment module uses the correct batch of motion data for processing each received image.

According to a third aspect of the present invention, there is provided a platform as set out in claim 13. The plurality of image sensors may be arranged at different locations around the platform, so as to provide a panoramic view of the platform surroundings.

According to a fourth aspect of the present invention, there is provided a method as set out in claim 14.

According to a fifth aspect of the present invention, there is provided a computer readable storage medium as set out in claim 15.

In some embodiments, the image adjustment module is configured to use the position data to determine a change in the field of view of the respective image sensor.

In some embodiments, each image captured by the image sensors is time stamped to show the time at which the image is captured. The time stamp may correspond to the beginning or end of the respective image sensor integration period.

If the system is producing imagery to be viewed by human beings, there is no need for the combined image that is output by the image processor to be updated at a rate above about 100 Hz. Instead, the frequency at which the combined image is updated need only be above the flicker frequency. Therefore, in cases where the image sensors output individual frames at rates in excess of 100Hz, it may not be necessary to combine each individual image that is received from those sensors. Time-stamping the images is useful in that it can allow the image processor to determine which images are to be combined, and which ones need not be combined. Time-stamping the images may also help the processor to coordinate different processes being carried out on frames that have been captured at different times. For example, whilst some image frames are being combined in the image combining module, the image processor may perform other processing tasks on image frames that have been captured at a different point in time. For example, the image processor may superimpose other data on the images, such as threat types and locations using information derived from all the collected imagery, not just the images that are combined.

Each image sensor may be wired directly to the image processor. For example, the image sensors may be wired by point-to-point wiring. Alternatively, the sensors and the image processor may all be connected to a data bus. As a further alternative, the image sensors may communicate wirelessly with the image processor.

In some embodiments, each image sensor comprises a CCD chip or a CMOS device. The CCD chip or CMOS device may have an array of 256 x 256 pixels, for example. In order to increase the field of view in one direction, a rectangular array of pixels may be used. For example, in order to increase the size of the field of view in the horizontal direction, the CCD chip may comprise a 320 x 256 array of pixels. In some embodiments, the CCD chip may be configurable to use a sub-array of the physical array for imaging. For example, the CCD chip may have a physical array of 320 x 256 pixels but only use a sub-array of 256 x 256 pixels for imaging.

The image sensors may be configured to sense radiation having a wavelength in the range 0.3 µm to 30 µm, the atmosphere being transparent to radiation at these wavelengths. More particularly, the image sensors may have an increased relative sensitivity to wavelengths in the range 0.3 µm to 14 µm. In some embodiments, the wavelength sensitivity may be obtained by selecting materials having a suitable bandgap for the CCD chip. In some embodiments, the wavelength sensitivity may be provided by use of filters in front of the sensor array. For example, interference filters having pass bands in the infra-red region of the spectrum may be used.

In some embodiments, the image adjustment module is configured to perform at least one of translating, rotating, and magnifying each received image based on the position data.

In some embodiments, combining the images into an output image comprises generating a single array of pixel intensity and/or hue values. Where the field of view of the image sensors partially overlap with one another, combining the images may comprise generating a single pixel intensity and/or hue value for each pixel in the region of overlap.

In some embodiments, the system may comprise four image sensors arranged on a platform, with their optical axes in a horizontal plane. In some embodiments, each image sensor may be arranged with its optical axis angled at 45 degrees to the forward direction of motion of the platform. Additional sensors may be provided having their optical axes arranged vertically, with one pointing up and one pointing down, for example. Each image sensor may have a field of view of 105 degrees x 105 degrees, providing an overlap between each sensor field of view and so removing the possibility of blind spots. Further image sensors may be added to the system, particularly if the design of the platform is such that parts of the hull obscure the fields of view of some of the image sensors. In some embodiments, the image sensors may be arranged such that the combined image output from the image processor comprises the full 4 pi steradians of the platform surroundings.

In some embodiments, for each image sensor, the image processor may be configured to use the optical flow of features identified in the first and second images to determine an angular velocity of the respective image sensor. The optical flow measurements may be combined with the data received from the respective motion sensors to more accurately determine a displacement of the image sensor in the interval between capturing the first and second images.

Each image sensor and its associated motion sensor may be housed together in a single respective unit that is then mounted at a specific location on the platform.

### Brief description of Figures

Embodiments of the invention will now be described by way of example with reference to the accompanying drawings in which:
Figure 1 shows an example of an aircraft including an image processor according to an embodiment;
Figure 2 shows a system including an image processor according to an embodiment;
Figure 3 shows the components of the image processor of Figure 2 in more detail;
Figure 4 shows a flow chart of steps implemented by the image processor of Figure 1;
Figure 5 shows an example of combining images received from two sensors into a single image using a conventional image processor; and
Figure 6 shows an example of combining images received from two sensors into a single image using an embodiment described herein.

### Detailed description

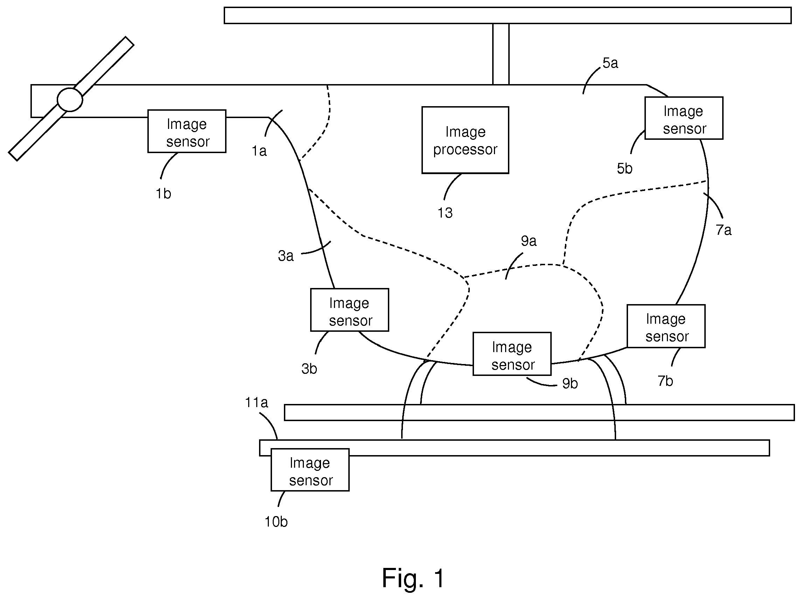

Figure 1 shows an example of an aircraft in accordance with an embodiment. The aircraft hull is formed from a number of discrete parts 1 a, 3a, 5a, 7a, 9a, 11 a, which are shown schematically by dotted lines. The parts of the hull may be connected together by one of several means. For example, the parts may be welded or riveted together. Each part of the hull has a respective image sensor 1 b, 3b, 5b, 5b, 7b, 9b, 11 b, which is attached to the hull exterior. The image sensors are, for example, digital imaging devices such as CCD cameras. The image sensors are arranged such that the field of view of any individual sensor at least partially overlaps with that of at least one of the other image sensors.

Included within the aircraft is an image processor 13 that receives image data from each image sensor and combines the received image data into a single panoramic view of the aircraft's surroundings. The combined image can then be viewed by the pilot on a display screen. The display screen may contain additional information as well as imagery e.g. alphanumerics, symbols etc. In the present embodiment, the image processor is connected to each one of the image sensors via a local network or bus that mediates communication between the different computer subsystems of the aircraft. However, other alternatives are envisaged; for example, the image processor may communicate wirelessly with each image sensor.

During flight, the discrete parts of the hull may undergo stress to different extents, causing them to vibrate or shift relative to one another. The alignment between the image sensors may vary over time, as one part of the hull moves with respect to another. As a result, the images captured from each sensor will no longer be registered correctly. In order to avoid artefacts appearing in the combined image, therefore, the image processor calibrates for the movement of the images sensors before combining the images with one another.

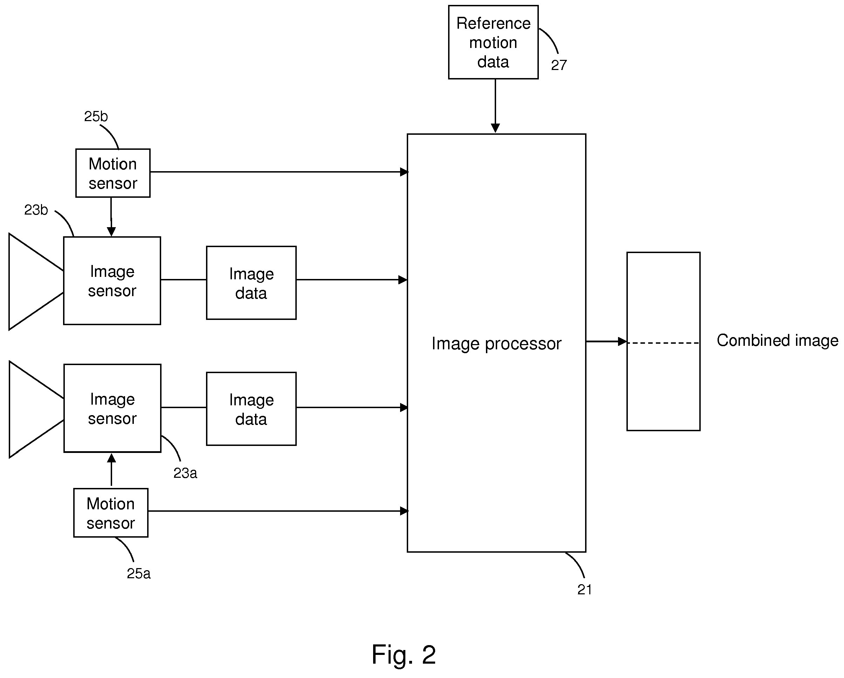

Examples of how the image processor achieves correct registration of the images will now be described by reference to Figures 2 to 6.

Figure 2 shows a system including an image processor 21 according to one embodiment. The image processor receives image data from a plurality of image sensors 23a, 23b mounted on a platform such as the aircraft shown in Figure 1. The image sensors 23a, 23b have separate fields of view that partially overlap with one another. The image processor 21 functions to combine the images received from each image sensor into a single combined image.

For simplicity, the system shown in this example includes two image sensors 23a, 23b only. However, in practice, the image processor may be configured to receive images from further image sensors, where the total number of image sensors is such as to ensure a combined field of view covering the full 4 pi steradians of the aircraft's surroundings.

During the interval between capturing successive images, one of the image sensors 23a, 23b may move relative to the other, for example as a result of engine/ propeller/rotor vibration, or variations in thrust due to variable air density entering the engine of the platform. In order to compensate for such movement, each image sensor has an associated motion sensor 25a, 25b that is arranged to monitor shifts in position of the image sensor during the interval between capturing successive images. In the present embodiment, each motion sensor comprises a plurality of accelerometers that are used to monitor the acceleration of the image sensor in different directions. The velocity and displacement of the image sensor in each direction can be determined by integrating the measurements of acceleration with respect to time.

To define fully the motion of the image sensor, it is necessary to determine its linear motion in three orthogonal axes and its rotation about three orthogonal axes. In theory, it is possible to do so using a minimum of 6 measurements. However, such an approach involves a significant degree of complexity in the calculation. To simplify the computation, an alternative approach such as that suggested by A. J. Padgaonkar et al can be used (see "Measurement of angular acceleration of a rigid body using linear accelerometers", by A. J. Padgaonkar et al in J. Appl. Mech. September 1975, Volume 42, Issue 3, p 552 - 557). In this approach, at least 3 additional measurements of acceleration may be made (taking the total to 9 measurements). In the present embodiment, each motion sensor comprises 4 three-axis accelerometers, allowing 12 measurements of linear acceleration, with the 4 accelerometers being arranged in a non-planar configuration (i.e. a configuration in which the accelerometers are not all located in a single plane). Then, by using the method disclosed by A. J. Padgaonkar, both the linear and angular motion of the respective image sensor can be determined with reduced computing power.

During flight of the aircraft, the entire hull will be subject to accelerations as the aircraft performs various manoeuvres (roll, pitch, yaw etc.) These accelerations may also be registered by the motion sensors associated with the individual image sensors. In order to register the images from each image sensor correctly, the image processor must dissociate the motion that each image sensor undergoes relative to the aircraft (i.e. that which arises from the local shifts and / or vibrations of the particular part of the hull to which the image sensor is attached) from the motion of the aircraft as a whole. In order to achieve this, the image processor includes a further input that receives motion data 27 from a reference motion sensor affixed to the aircraft. The reference motion sensor may, for example, comprise part of the aircraft's inertial navigation system.

For each image sensor, the image processor uses the reference motion data together with the motion data received from the respective image sensor to calculate a local displacement undergone by the image sensor during the interval between capturing the first and second images. In effect, a local coordinate frame is defined inside the aircraft, and by combining the reference motion data with the individual image sensor data, the image processor is able to determine the shift in position of the image sensor in the local coordinate frame.

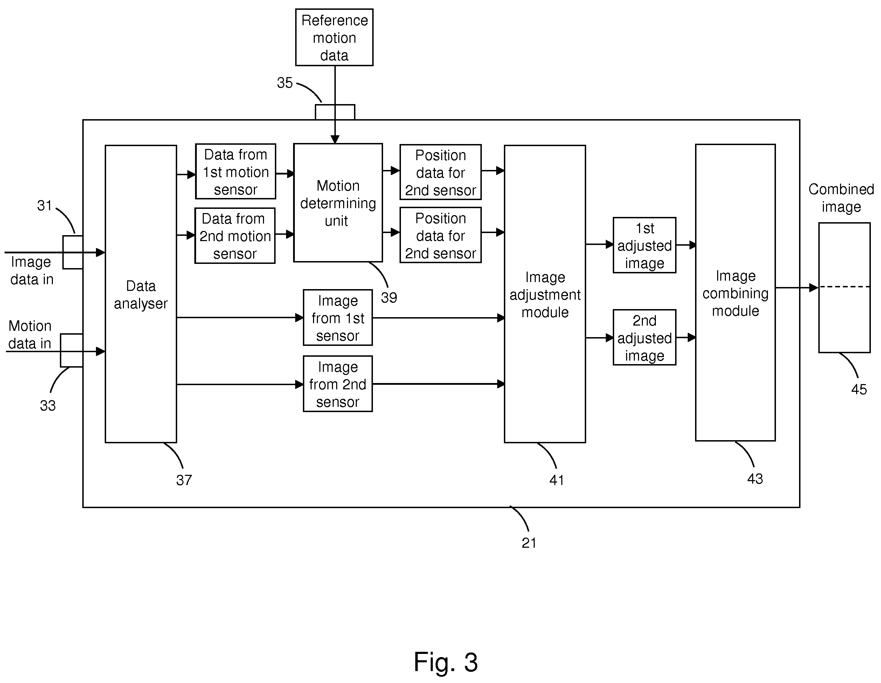

Figure 3 shows the components of the image processor of the present embodiment in more detail. The image processor 21 has a first port 31 through which image data from the image sensors is input to the processor, and a second port 33 through which the motion data from the motion sensors is input into the processor. A third port 35 is provided to receive the reference motion data.

A data analyser 37 is used to identify the image sensor from which a particular image has been received, and which of the two motion sensors a particular batch of motion data is received from.

The data analyser forwards each batch of motion data to a motion determining unit 39, which also receives the reference motion data. For each image sensor, the motion determining unit 39 calculates the net displacement that the image sensor has undergone in the local coordinate frame of the aircraft in the interval since the last image was captured. The displacement is output as position data to an image adjustment module 41, which uses the data to process the received images in such a way as to compensate for the movement of the respective image sensor.

For each image, the image adjustment module 41 may perform one or more of laterally shifting the rows or columns of pixels in the image, rotating the image, or adjusting the magnification of the image. Once the image adjustment has been performed, the adjusted images are output to the image combining module 43 where they are combined into a single image 45 to be output for display to the pilot.

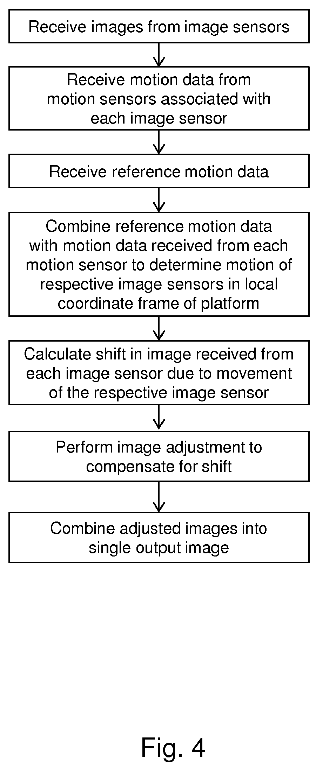

Figure 4 shows a flow chart of the steps implemented by the image processor of the present embodiment.

In some embodiments, the motion sensors sense the movement of the respective image sensor by use of accelerometers and / or gyroscopes. Accelerometers provide measurements of instantaneous (linear) acceleration and gyroscopes provide measurements of instantaneous angular velocity. In order to derive angular positional information, it is necessary to integrate one or other of these measurements. However, where an accelerometer has a zero error in one or more axes, the error will be propagated through the calculation, resulting in a drift in the apparent angular position of the sensor.

In order to address this problem, the measurements of acceleration may be complemented by optical flow measurements. Optical flow is an established technique that can provide direct measurements of the angular velocity of the image sensor and which can be used to correct for drifts in angular velocity / position as calculated using the data from the accelerometers. By measuring the angular positions of distant objects in the fields of view of more than one sensor (in the overlap region between two sensors), this correction can be transferred between sensors.

In general, optical flow measurements can provide the angular position of features in the scene, but only to an accuracy of about a pixel. The use of optical flow provides additional data that is complementary to that obtained from the accelerometers, as the accelerometer may be sensitive to rapid changes that may be too small to be visible in the imagery.

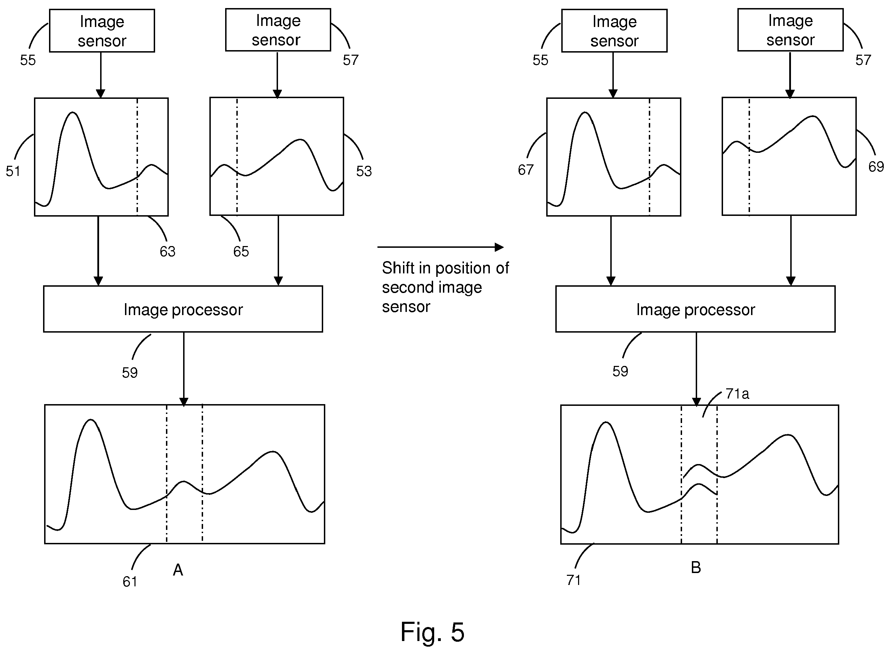

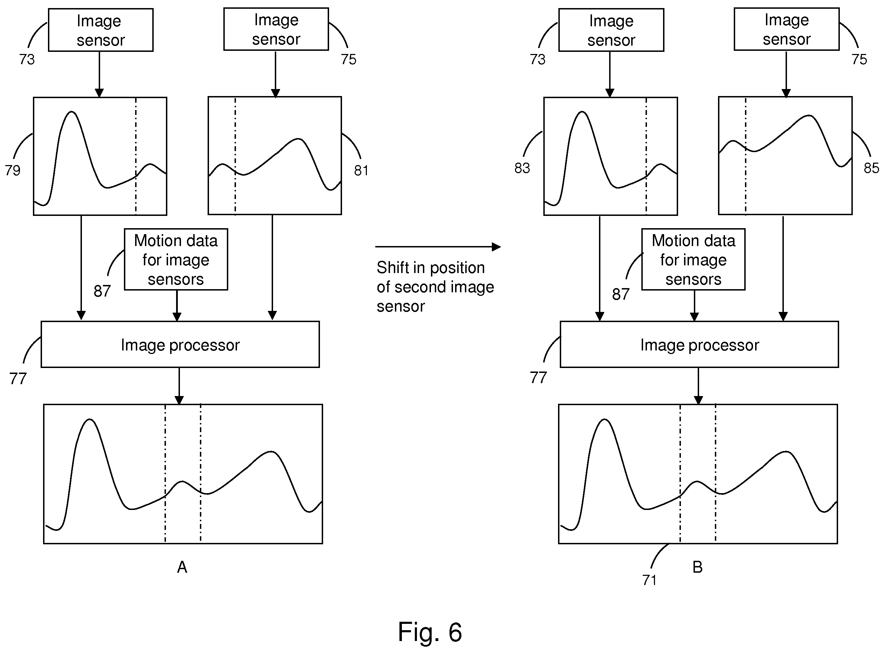

An example of how an image processor may be used to remove artefacts resulting from motion of one of the image sensors will now be described by reference to Figures 5 and 6.

Figure 5A shows an arrangement in which images 51, 53 captured by two image sensors 55, 57 at a first point in time are combined in a conventional image processor 59 to form a single output image 61. In this example, the image sensors 55, 57 have partially overlapping fields of view; as shown by the dotted lines, a portion 63 of the right hand side of the image 51 from the first image sensor 55 overlaps with a portion 65 on the left hand side of the image from the second image sensor 57. Together, the images show the shape of the horizon as seen from an aircraft.

Figure 5B shows a second pair of images 67, 69 that are captured by the first 55 and second 57 image sensors at a later moment in time. During the interval between capturing each pair of images, the second image sensor 57 undergoes a shift in its position. As a result, the field of view of the second image sensor 57 changes, producing an artefact in the combined image 71. Specifically, the two halves of the combined image 71 are offset with respect to one another, giving a false impression of the landscape. The artefact is particularly evident in the region of overlap 71 a between the two images.

Figure 6 shows an example of how the images from two sensors 73, 75 may be processed using an image processor 77 according to an embodiment. The image processor 77 is again used to combine pairs of images that are captured by the two image sensors. Figure 6A shows a first pair of images 79, 81 that are captured by the image sensors 73, 75 at a first point in time, whilst Figure 6B shows a second pair of images 83, 85 that have been captured at a later point in time.

As in Figure 5, the second image sensor 75 undergoes a shift in position which causes a change in the field of view of the image 85 that is captured at the later time point. However, in the present embodiment, the image processor receives motion data 87 indicating the motion of the respective image sensors 73, 75 in the interval between capturing each pair of images. Using this motion data 87, the image processor 77 is able to compensate for the movement of the second image sensor 75 when combining the two images 83, 85 together. Thus, in contrast to Figure 5B, the output image remains free of artefacts, even though the field of view of the second image sensor 75 has changed: as can be seen in Figure 6B, the two halves of the image are perfectly aligned in the overlapping region.

In ensuring that each image sensor is correctly aligned, embodiments described herein can allow for the use of parallax correction to provide additional range information for objects that are present in the region of overlap between the fields of view of the respective image sensors. For example, some objects will not appear in the "correct" position for distant objects when their positions are measured in more than one sensor. These will be nearby objects, which can include objects passing the platform and the ground. Since the baseline is always known for any pair of sensors, embodiments permit the use of parallax techniques to measure of distance to these objects. For example, nearby objects can be ranged using the parallax between two adjacent sensor fields of view.

An application of this could be in "dusty landings" where a rotary wing platform slows to a hover just above the ground and descends vertically. First, the height above the surface can be determined by using parallax between images captured from several image sensors. Then, the change in height as the platform descends can be monitored by using optical flow measurements correlating surface features in successive image frames captured by a single downward-looking sensor. In this way, a more accurate determination of height above ground and descent rate can be made.

When using parallax to determine the height of the rotary wing platform from the ground, it is preferable that the two sensors capturing images have simultaneous integrations (i.e. the image sensors should capture their respective images simultaneously). In practice, provided the image frame rate is high enough, it may be possible to obtain satisfactory results using non-simultaneous integrations for parallax measurements of stationary objects on the ground, but not for objects passing the platform. The optical flow measurements that are then used to measure the change in height need not require simultaneous integrations. For example once the height above ground has been determined using parallax, the optical flow measurements that are then carried out only need imagery from one sensor (i.e. the downward-pointing sensor) in order to determine the change in height and therefore rate of descent.

While certain embodiments have been described, these embodiments have been presented by way of example only, and are not intended to limit the scope of the invention. Indeed, the novel methods, devices and systems described herein may be embodied in a variety of forms. Furthermore, various omissions, substitutions and changes in the form of the methods and systems described herein may be made without departing from the spirit of the invention. The accompanying claims and their equivalents are intended to cover such forms or modifications as would fall within the scope of the invention.

## Claims

1. An image processor (13, 21, 77) for processing images received from a plurality of image sensors (23A/B,55,57,73,75) affixed to a platform, each image sensor (23a,55,73) having a field of view that at least partially overlaps with the field of view of another one of the other image sensors, (23b, 57, 75) the image processor comprising:
an image data input (31) for receiving a respective first image captured by each one of the plurality of image sensors and a respective second image subsequently captured by each one of the plurality of image sensors;
a first motion data input (33) for receiving motion data from a plurality of motion sensors, (25a/b) each motion sensor being associated with a respective one of the image sensors and configured to detect motion of the respective image sensor,
a second motion data input (35) for receiving reference motion data from a reference motion sensor (27) located onboard the platform;
a motion determining unit (39) configured to determine, for each image sensor, whether or not the respective image sensor has moved from an expected position during the interval between capturing the first and second images, the determination being based on the reference motion data and the motion data received from the motion sensor associated with the respective image sensor, the motion determining unit being further configured to output position data indicating the change in position of the respective image sensor from its expected position;
an image adjustment module (41) configured to use the position data to adjust the second image received from the respective image sensor, to thereby provide a respective adjusted image; and
an image combining module (43) for combining each one of the adjusted images to form a single output image.

2. An image processor according to claim 1, wherein the image adjustment module is configured to determine a change in the field of view of a respective image sensor based on the motion data associated with the image sensor.

3. An image processor according to claim 1 or 2, wherein the image adjustment module is configured to perform at least one of translating, rotating, and magnifying the second

4. An image processor according to any one of claims 1 to 3 wherein the image sensors are synchronised to begin image capture at the same time as one another.

5. An image processor according to any one of the preceding claims wherein the image sensors are synchronised to output each captured image at the same time as one another and / or wherein the image sensors each have the same exposure or camera integration time.

6. An image processor according to any one of claims 4 to 5, wherein the image processor is configured to trigger the image sensors to begin capturing each image.

7. An image processor according to any one of the preceding claims, wherein the image combining module is configured to combine the adjusted images into an output image by generating a single array of pixel intensity and/or hue values.

8. An image processor according to any one of the preceding claims, wherein for each image sensor, the image processor is configured to use the optical flow of features identified in the first and second images to determine an angular velocity of the respective image sensor.

9. A system for combining images received from image sensors positioned at different points around a platform in order to generate an image of the platform surroundings, the system comprising:
a plurality of image sensors, each image sensor being configured to output a respective first and second image;
a plurality of motion sensors, each motion sensor being associated with a respective one of the image sensors and configured to detect motion of the associated image sensor during the interval between capturing the first and second images; and
an image processing module according to the any one of the preceding claims.

10. A system according to claim 9, wherein each motion sensor comprises one or more accelerometers.

11. A system according to claim 9 or 10 wherein the image sensors are synchronised to capture and output images simultaneously with one another and / or wherein each image sensor comprises a CCD chip or a CMOS device.

12. A system according to any one of claims 9 to 11, wherein the image sensors are configured to sense radiation having a wavelength in the range 0.3 µm to 30 µm.

13. A platform comprising a system according to any one of claims 9 to 12.

14. A method of processing images received from a plurality of image sensors affixed to a platform, each image sensor having a field of view that at least partially overlaps with the field of view of another one of the other image sensors, the method comprising:
receiving a respective first image captured by each one of the plurality of image sensors and a respective second image subsequently captured by each one of the plurality of image sensors;
receiving motion data from a plurality of motion sensors, each motion sensor being associated with a respective one of the image sensors and configured to detect motion of the respective image sensor,
receiving reference motion data from a reference motion sensor located onboard the platform;
determining, for each image sensor, whether or not the respective image sensor has moved from an expected position during the interval between capturing the first and second images, the determination being based on the reference motion data and the motion data received from the motion sensor associated with the respective image sensor;
outputting position data indicating the change in position of the respective image sensor from its expected position;
using the position data to adjust the second image received from the respective image sensor, to thereby provide a respective adjusted image; and
combining each one of the adjusted images to form a single output image.

15. A computer readable storage medium storing computer executable code that when executed by a computer will cause the computer to carry out a method according to claim 14.

## Patentansprüche

1. Bildprozessor (13, 21, 77) zum Verarbeiten von Bildern, die von einer Vielzahl von Bildsensoren (23A/B, 55, 57, 73, 75) empfangen werden, die an einer Plattform angebracht sind, wobei jeder Bildsensor (23a, 55, 73) ein Sichtfeld hat, das mindestens teilweise mit dem Sichtfeld eines anderen der anderen Bildsensoren (23b, 57, 75) überlappt, wobei der Bildprozessor Folgendes umfasst:
einen Bilddateneingang (31) zum Empfangen eines jeweiligen ersten Bildes, das von jedem der Vielzahl von Bildsensoren aufgenommen wird, und eines jeweiligen zweiten Bildes, das anschließend von jedem der Vielzahl von Bildsensoren aufgenommen wird;
einen ersten Bewegungsdateneingang (33) zum Empfangen von Bewegungsdaten von einer Vielzahl von Bewegungssensoren (25a/b), wobei jeder Bewegungssensor mit einem jeweiligen der Bildsensoren assoziiert ist und dazu konfiguriert ist, Bewegung des jeweiligen Bildsensors zu erkennen,
einen zweiten Bewegungsdateneingang (35) zum Empfangen von Referenzbewegungsdaten von einem Referenzbewegungssensor (27), der an Bord der Plattform angeordnet ist;
eine Bewegungsbestimmungseinheit (39), dazu konfiguriert, für jeden Bildsensor zu bestimmen, ob sich der jeweilige Bildsensor während des Intervalls zwischen dem Aufnehmen des ersten und zweiten Bilds von einer erwarteten Position bewegt hat oder nicht, wobei die Bestimmung auf den Referenzbewegungsdaten und den Bewegungsdaten basiert, die vom Bewegungssensor empfangen werden, der mit dem jeweiligen Bildsensor assoziiert ist, wobei die Bewegungsbestimmungseinheit außerdem dazu konfiguriert ist, Positionsdaten auszugeben, die die Veränderung in der Position des jeweiligen Bildsensors von seiner erwarteten Position anzeigen;
ein Bildanpassungsmodul (41), dazu konfiguriert, die Positionsdaten zu verwenden, um das vom jeweiligen Bildsensor empfangene zweite Bild anzupassen, um dadurch ein jeweiliges angepasstes Bild bereitzustellen; und
ein Bildkombiniermodul (43) zum Kombinieren eines jeden der angepassten Bilder, um ein einzelnes Ausgabebild zu formen.

2. Bildprozessor nach Anspruch 1, worin das Bildanpassungsmodul dazu konfiguriert ist, eine Veränderung im Sichtfeld eines jeweiligen Bildsensors auf der Basis der Bewegungsdaten zu bestimmen, die mit dem Bildsensor assoziiert sind.

3. Bildprozessor nach Anspruch 1 oder 2, worin das Bildanpassungsmodul dazu konfiguriert ist, mindestens eins von Folgenden auszuführen: Verschieben, Rotieren und Vergrößern des zweiten Bildes auf der Basis der empfangenen Positionsdaten.

4. Bildprozessor nach einem der Ansprüche 1 bis 3, worin die Bildsensoren synchronisiert sind, die Bildaufnahme gleichzeitig zusammen zu beginnen.

5. Bildprozessor nach einem der vorhergehenden Ansprüche, worin die Bildsensoren synchronisiert sind, jedes aufgenommene Bild gleichzeitig zusammen auszugeben und/oder worin jeder der Bildsensoren dieselbe Belichtungszeit oder Kameraintegrationszeit hat.

6. Bildprozessor nach einem der Ansprüche 4 bis 5, worin der Bildprozessor dazu konfiguriert ist, die Bildsensoren für den Beginn der Aufnahme eines jeden Bildes zu triggern.

7. Bildprozessor nach einem der vorhergehenden Ansprüche, worin das Bildkombiniermodul dazu konfiguriert ist, die angepassten Bilder durch Erzeugen eines einzelnen Arrays von Pixelintensitäts- und/oder Farbtonwerten in ein Ausgabebild zu kombinieren.

8. Bildprozessor nach einem der vorhergehenden Ansprüche, worin der Bildprozessor für jeden Bildsensor dazu konfiguriert ist, den optischen Fluss von in dem ersten und zweiten Bild identifizierten Merkmalen zu verwenden, um eine Winkelgeschwindigkeit des jeweiligen Bildsensors zu bestimmen.

9. System zum Kombinieren von Bildern, die von an verschiedenen Stellen in einer Plattform positionierten Bildsensoren empfangen werden, um ein Bild der Umgebung der Plattform zu erzeugen, wobei das System Folgendes umfasst:
eine Vielzahl von Bildsensoren, wobei jeder Bildsensor dazu konfiguriert ist, ein jeweiliges erstes und zweites Bild auszugeben;
eine Vielzahl von Bewegungssensoren, wobei jeder Bewegungssensor mit einem jeweiligen der Bildsensoren assoziiert ist und dazu konfiguriert ist, Bewegung des assoziierten Bildsensors während des Intervalls zwischen dem Aufnehmen des ersten und zweiten Bilds zu detektieren; und
ein Bildverarbeitungsmodul nach einem der vorhergehenden Ansprüche.

10. System nach Anspruch 9, worin jeder Bewegungssensor einen oder mehrere Beschleunigungsmesser umfasst.

11. System nach Anspruch 9 oder 10, worin die Bildsensoren synchronisiert sind, Bilder gleichzeitig zusammen aufzunehmen und auszugeben und/oder worin jeder Bildsensor einen CCD-Chip oder eine CMOS-Einrichtung umfasst.

12. System nach einem der Ansprüche 9 bis 11, worin die Bildsensoren dazu konfiguriert sind, Strahlung mit einer Wellenlänge im Bereich von 0,3 µm bis 30 µm zu erkennen.

13. Plattform, die ein System nach einem der Ansprüche 9 bis 12 umfasst.

14. Verfahren zum Verarbeiten von Bildern, die von einer Vielzahl von Bildsensoren empfangen werden, die an einer Plattform angebracht sind, wobei jeder Bildsensor ein Sichtfeld hat, das mindestens teilweise mit dem Sichtfeld eines anderen der anderen Bildsensoren überlappt, wobei das Verfahren Folgendes umfasst:
Empfangen eines jeweiligen ersten Bildes, das von jedem der Vielzahl von Bildsensoren aufgenommen wird, und eines jeweiligen zweiten Bildes, das anschließend von jedem der Vielzahl von Bildsensoren aufgenommen wird;
Empfangen von Bewegungsdaten von einer Vielzahl von Bewegungssensoren, wobei jeder Bewegungssensor mit einem jeweiligen der Bildsensoren assoziiert ist und dazu konfiguriert ist, Bewegung des jeweiligen Bildsensors zu erkennen;
Empfangen von Referenzbewegungsdaten von einem Referenzbewegungssensor, der an Bord der Plattform angeordnet ist;
Bestimmen für jeden Bildsensor, ob sich der jeweilige Bildsensor während des Intervalls zwischen dem Aufnehmen des ersten und zweiten Bilds von einer erwarteten Position bewegt hat oder nicht, wobei die Bestimmung auf den Referenzbewegungsdaten und den Bewegungsdaten basiert, die vom Bewegungssensor empfangen werden, der mit dem jeweiligen Bildsensor assoziiert ist;
Ausgeben von Positionsdaten, die die Veränderung in der Position des jeweiligen Bildsensors von seiner erwarteten Position anzeigen;
Verwenden der Positionsdaten, um das vom jeweiligen Bildsensor empfangene zweite Bild anzupassen, um dadurch ein jeweiliges angepasstes Bild bereitzustellen; und
Kombinieren eines jeden der angepassten Bilder, um ein einzelnes Ausgabebild zu formen.

15. Computerlesbares Speichermedium, das computerausführbaren Code speichert, der, wenn er von einem Computer ausgeführt wird, den Computer veranlasst, ein Verfahren nach Anspruch 14 auszuführen.

## Revendications

1. Processeur d'image (13, 21, 77) destiné à traiter des images reçues à partir d'une pluralité de capteurs d'image (23A/B, 55, 57, 73, 75) fixés à une plate-forme, chaque capteur d'image (23a, 55, 73) présentant un champ de vision qui est au moins partiellement en chevauchement avec le champ de vision d'un autre des autres capteurs d'image (23b, 57, 75), le processeur d'image comprenant :
une entrée de données d'image (31) destinée à recevoir une première image respective capturée par chaque capteur de la pluralité de capteurs d'image et une seconde image respective subséquemment capturée par chaque capteur de la pluralité de capteurs d'image ;
une première entrée de données de mouvement (33) destinée à recevoir des données de mouvement en provenance d'une pluralité de capteurs de mouvement (25a/b), chaque capteur de mouvement étant associé à un capteur respectif des capteurs d'image et configuré de manière à détecter le mouvement du capteur d'image respectif,
une seconde entrée de données de mouvement (35) destinée à recevoir des données de mouvement de référence en provenance d'un capteur de mouvement de référence (27) situé à bord de la plate-forme ;
une unité de détermination de mouvement (39) configurée de manière à déterminer, pour chaque capteur d'image, si le capteur d'image respectif s'est déplacé ou non à partir d'une position attendue au cours de l'intervalle entre la capture de la première image et la capture de la seconde image, la détermination étant basée sur les données de mouvement de référence et les données de mouvement reçues à partir du capteur de mouvement associé au capteur d'image respectif, l'unité de détermination de mouvement étant en outre configurée de manière à générer en sortie des données de position indiquant le changement de position du capteur d'image respectif par rapport à sa position attendue ;
un module d'ajustement d'image (41) configuré de manière à utiliser les données de position en vue d'ajuster la seconde image reçue à partir du capteur d'image respectif, en vue de fournir par conséquent une image ajustée respective ; et
un module de combinaison d'images (43) destiné à combiner chacune des images ajustées, en vue de former une image de sortie unique.

2. Processeur d'image selon la revendication 1, dans lequel le module d'ajustement d'image est configuré de manière à déterminer un changement dans le champ de vision d'un capteur d'image respectif, sur la base des données de mouvement associées au capteur d'image.

3. Processeur d'image selon la revendication 1 ou 2, dans lequel le module d'ajustement d'image est configuré de manière à mettre en oeuvre au moins une opération parmi une translation, une rotation et un agrandissement de la seconde image, sur la base des données de position reçues.

4. Processeur d'image selon l'une quelconque des revendications 1 à 3, dans lequel les capteurs d'image sont synchronisés de manière à commencer mutuellement et simultanément une capture d'image.

5. Processeur d'image selon l'une quelconque des revendications précédentes, dans lequel les capteurs d'image sont synchronisés de manière à générer en sortie mutuellement et simultanément chaque image capturée et/ou dans lequel les capteurs d'image présentent chacun la même exposition ou le même temps d'intégration de caméra.

6. Processeur d'image selon l'une quelconque des revendications 4 à 5, dans lequel le processeur d'image est configuré de manière à déclencher les capteurs d'image afin de commencer à capturer chaque image.

7. Processeur d'image selon l'une quelconque des revendications précédentes, dans lequel le module de combinaison d'images est configuré de manière à combiner les images ajustées en une image de sortie, en générant une matrice unique de valeurs d'intensité de pixels et/ou de valeurs de tonalité chromatique.

8. Processeur d'image selon l'une quelconque des revendications précédentes, dans lequel pour chaque capteur d'image, le processeur d'image est configuré de manière à utiliser le flux optique de caractéristiques identifiées dans les première et seconde images en vue de déterminer une vitesse angulaire du capteur d'image respectif.

9. Système destiné à combiner des images reçues à partir de capteurs d'image positionnés en différents points autour d'une plate-forme en vue de générer une image de l'environnement de la plate-forme, le système comprenant :
une pluralité de capteurs d'image, chaque capteur d'image étant configuré de manière à générer en sortie des première et seconde images respectives ;
une pluralité de capteurs de mouvement, chaque capteur de mouvement étant associé à un capteur respectif des capteurs d'image et configuré de manière à détecter le mouvement du capteur d'image associé au cours de l'intervalle entre la capture de la première image et la capture de la seconde image ; et
un module de traitement d'image selon l'une quelconque des revendications précédentes.

10. Système selon la revendication 9, dans lequel chaque capteur de mouvement comprend un ou plusieurs accéléromètres.

11. Système selon la revendication 9 ou 10, dans lequel les capteurs d'image sont synchronisés de manière à capturer et à générer en sortie des images mutuellement et simultanément, et/ou dans lequel chaque capteur d'image comprend une puce CCD ou un dispositif CMOS.

12. Système selon l'une quelconque des revendications 9 à 11, dans lequel les capteurs d'image sont configurés de manière à détecter un rayonnement dont la longueur d'onde est incluse dans la plage allant de 0,3 µm à 30 µm.

13. Plate-forme comprenant un système selon l'une quelconque des revendications 9 à 12.

14. Procédé de traitement d'images reçues à partir d'une pluralité de capteurs d'image fixés à une plate-forme, chaque capteur d'image présentant un champ de vision qui est au moins partiellement en chevauchement avec le champ de vision d'un autre des autres capteurs d'image, le procédé comprenant les étapes ci-dessous consistant à :
recevoir une première image respective capturée par chaque capteur de la pluralité de capteurs d'image, et une seconde image respective subséquemment capturée par chaque capteur de la pluralité de capteurs d'image ;
recevoir des données de mouvement en provenance d'une pluralité de capteurs de mouvement, chaque capteur de mouvement étant associé à un capteur respectif des capteurs d'image et configuré de manière à détecter le mouvement du capteur d'image respectif ;
recevoir des données de mouvement de référence en provenance d'un capteur de mouvement de référence situé à bord de la plate-forme ;
déterminer, pour chaque capteur d'image, si le capteur d'image respectif s'est déplacé ou non à partir d'une position attendue au cours de l'intervalle entre la capture de la première image et la capture de la seconde image, la détermination étant basée sur les données de mouvement de référence et les données de mouvement reçues à partir du capteur de mouvement associé au capteur d'image respectif ;
générer en sortie des données de position indiquant le changement de position du capteur d'image respectif par rapport à sa position attendue ;
utiliser les données de position en vue d'ajuster la seconde image reçue à partir du capteur d'image respectif, en vue de fournir par conséquent une image ajustée respective ; et
combiner chacune des images ajustées, en vue de former une image de sortie unique.

15. Support de stockage lisible par ordinateur stockant un code exécutable par ordinateur qui, lorsqu'il est exécuté par un ordinateur, amène l'ordinateur à mettre en oeuvre un procédé selon la revendication 14.
